(19) Europäisches Patentamt
European Patent Office
Office européen des brevets

(11) EP 3 789 787 A1

(12) EUROPEAN PATENT APPLICATION

(43) Date of publication:
10.03.2021 Bulletin 2021/10

(51) Int Cl.:
G01S 7/481 (2006.01)          G01S 7/483 (2006.01)
G01S 17/10 (2020.01)

(21) Application number: 19195236.5

(22) Date of filing: 03.09.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Xenomatix NV
3001 Leuven (Heverlee) (BE)

(72) Inventors:
• PAESEN, Rik
  3590 Diepenbeek (BE)
• GEUENS, Filip
  3220 Holsbeek (BE)

(74) Representative: IPLodge bv
Technologielaan 9
3001 Heverlee (BE)

(54) SOLID-STATE LIDAR SYSTEM FOR DETERMINING DISTANCES TO A SCENE

(57) The present disclosure relates to a solid-state LIDAR system for determining distances to a scene comprising a projector for illuminating the scene with a discrete spot pattern wherein each spot is comprising a temporal sequence of pulses of laser light, a light receiving device comprising a range-gating multi-pixel detector. The projector comprises a two-dimensional laser array having a plurality of discrete solid-state laser light sources for simultaneously emitting a pulsed first laser beam, a mixing chamber configured for receiving and allowing propagation of each of the first pulsed laser beams until at least a portion of light rays of each first laser beam is overlapping with at least a portion of light rays of adjacent first laser beams, a reshaping optical system configured for receiving the overlapping light rays of the first pulsed laser beams and for refocussing the overlapping light rays and generate a plurality of second pulsed laser beams such that each second laser beam comprises light rays originating from multiple first laser beams, and a projector lens system for projecting the discrete spot pattern formed by the second laser beams towards the scene.

Fig. 5

## Description

## Field of the disclosure

The present disclosure relates to a LIDAR system for determining distances to a scene. More particularly, the invention relates to a time-of-flight (TOF) based sensing system using laser beams.

## Background

Such a system for determining distances to a scene is known as a LIDAR (Light Detection And Ranging) system. LIDAR systems measure the distance to a scene by illuminating the scene with laser light and by detecting reflected laser light in a detector, generally located near the laser source that emitted the laser light. Hence, the time interval between the emission of the laser light and the detection of reflected laser light is proportional with twice the distance to the object in the scene or a part of the scene that reflected the laser light.

Most known LIDAR systems make use of a direct TOF (DToF) method. These systems comprise a powerful pulsed laser, operating in a nanosecond pulse regime, a mechanical scanning system to scan the pulsed laser beam, and a pulse detector. Systems of this type are presently available from vendors including Velodyne LIDAR of Morgan Hill, California. The Velodyne HDL-64E, as an example of state-of-the-art systems, uses 64 high-power lasers and 64 avalanche diode detectors in a mechanically rotating structure at 5 to 15 rotations per second.

These DToF system are known to measure distances with a high spatial accuracy. However, these systems have also a number of drawbacks. For example, these systems require lasers having a power level that is too high to be obtained with currently available semiconductor lasers, whose power level is orders of magnitude lower. In addition, the use of mechanically rotating elements for scanning purposes further limits the prospects for miniaturization, reliability, and cost reduction of this type of system.

Compactness of the LIDAR system is an important factor for applications in the automotive sector where the LIDAR system is for example to be coupled to a front windshield or a front bumper of a car. Indeed, LIDAR systems are a key factor for the development autonomous driving or driver assistance systems. In this context, LIDAR systems are used to detect obstacles, such as other vehicles or objects in the environment of the vehicle.

In WO2017/068199, a solid-state LIDAR system is proposed that allows to place an illumination system and a detection system based on solid-state technology in a compact housing. The system is based on a range-gating detection technique which is distinct from the DToF technique. This system disclosed in WO2017/068199 comprises a projector for illuminating the scene with a discrete spot pattern wherein each spot is comprising a temporal sequence of pulses of laser light. The laser light is provided by solid-state lasers forming a compact and low-power laser system, as an array of solid state lasers being semiconductor based lasers known also as VCSELs. Each of the laser beams is a pulsed laser beam comprising a temporal sequence of pulses of laser light. A CMOS-based range-gating detector is used for detecting spots of reflected laser light representing the discrete spot pattern as reflected by the scene. The detector also comprises control means for accumulating the reflected laser light in synchronization with the illumination of the scene. Processing means finally allow for calculating the distance to the scene based on the accumulated reflected laser light.

When applying a DToF technique, pulse widths of a few nanoseconds are used, i.e. the pulse widths are much shorter than the TOF to be measured. On the other hand, when applying a range gating technique, the pulse width used is much longer and is generally equal to or of the order of the TOF to be measured. For example, if an object is at a distance of 100 meter, it takes about 666 nanoseconds for the light to travel back and forth. The use of broader pulses allows the detector to accumulate charges during a longer time interval. Although the solid-state laser beams provide less power than conventional laser beams, a sufficient signal to noise ratio can be obtained with the CMOS-based detector using a range gating technique when applying a sufficient pulse repetition.

As mentioned above, the combination of the use of solid-state laser technology and CMOS-based pixel detector technology allows for manufacturing compact LIDAR systems in a cost-effective way. There is however a continuous need to further improve these compact LIDAR systems and more particularly, there is a need to sense distances with an acceptable spatial accuracy.

The illumination of a scene with the temporal sequence of pulses forming a spot pattern, the accumulation of reflected laser light, the readout of the charges and the calculation of a distance based on the accumulated charges is generally named a frame or a frame measurement. The spatial accuracy that can be reached with the LIDAR system applying a range-gating detection technique generally depends on the precision of a single frame measurement and the number of frames taken for determining an average object distance. Indeed, when performing multiple frame measurements, there is a spread on the measured distances from frame to frame. The error of a single frame measurement is generally named the temporal error, being the sigma value $\sigma$ of the measurement distribution. Therefore, multiple frames are always taken and an average object distance is determined. In this way, the error on the average object distance value is reduced with a factor $1/\sqrt{N_F}$ when compared to the error of a single frame measurement, with $N_F$ being the number of frames. For a perfectly calibrated LIDAR device, the calculated average distance, obtained from the multiple frames, is equal to the real distance within a confidence interval determined by the standard deviation $\sigma_{avg} = \sigma/\sqrt{N_F}$.

An acceptable spatial accuracy for these systems, e.g. for automotive applications, is for example a four sigma confidence interval, i.e. 4 x $\sigma_{avg}$, that is in the range between 0.1 % and 0.5% of the average distance value. When the average distance determined, after a number of frame measurements, is equal to for example 100 m and if the four sigma confidential interval obtained is equal to 0.2%, then the average object distance of 100 m as determined is, with a 99,99 % probability, equal to the real distance within an interval of +/-20 cm.

## Summary

It is an object of the present disclosure to provide a robust, reliable, compact and cost-effective solid-state LIDAR system for determining distances to a scene and at the same time provide a system allowing to measure distances with an acceptable spatial accuracy as required for specific applications, such as for example automotive applications.

The present invention is defined in the appended independent claims. The dependent claims define advantageous embodiments.

The invention is, at least in part, based on the inventors observation that despite a strong effort for reducing or correcting the detected signal from noise contributions, such as background noise from ambient light, pixel noise or noise resulting from for example TOF response times, the obtained spatial accuracy is less than what would theoretically be expected, i.e. finding for example an average determined distance that is equal to the real distance within a 99,99% confidence interval. Even after performing the distance measurement a sufficient multiple number of times to reduce the Poisson noise, it was observed that the average distance measured was still different from the real distance with an amount much larger than the expected spatial accuracy. The inventors analysis of multiple tests performed with a solid-state LIDAR system as described in WO2017/068199, has led to the inventors insight that, after calibration for known systematic noise elements, the remaining major noise contribution when using a LIDAR system producing spatially separated pulses of coherent laser light combined with a range-gating detecting technique is speckle related noise.

The speckle noise is a semi-random noise caused by an interference effect at the intersection with the object that reflects the laser light, and which propagates through the reflected laser light and is further accumulated in the detector, adding noise to the integrated charge in the range-gating detector. The speckle causes the reflection of the laser light to be uneven and depending on the material structure of the object. The speckle pattern is also varying as function of time and hence speckle varies over the pulses and within the pulse width of the pulsed laser beams. When applying a range gating technique wherein reflected laser light is accumulated in multiple detection time windows corresponding to the temporal sequence of projected pulses, it is observed that the effect of the speckle can vary from one detection time window to the other and differing over the multiple pixels or charge wells integrating the charge during the detection time window. As discussed for example in WO2017/068199, when applying a range-gating technique, accumulated counts over a sequence of pulses are generally detected in a first time window and in a succeeding second time window. To determine a distance, a ratio is determined between the accumulated counts detected in the first time window and the sum of the accumulated counts detected in the first time window with the accumulated counts detected in the second time window. Hence when taking such a ratio of counts, and as the speckle is varying from time window to time window, non-calibratable deviations occur between the real distance and the measured distance. Hence, this results in a poor spatial accuracy.

The dominating speckle noise contribution is held to be a consequence of the characteristics of the laser light and the combination of illuminating the scene with a discrete spot pattern of laser light wherein each spot is formed by a sequence of pulses of coherent laser light and this combined with the use of a range-gating detector that is integrating charges over a time period of the order of the TOF. In contrast, with DToF LIDAR systems, very short pulses in the nanosecond range are used and there is no integration of charges as is the case with the range gating technique. Therefore speckle noise is not observed as a major problem for these type of DToF systems. In view of the compactness of the solid-state LIDAR system, solving the random speckle problem for such a system based on pattern illumination with discrete spots of laser light and based on the range gating technique is challenging.

According to an aspect of the invention, a solid-state LIDAR system for determining distances to one or more objects of a scene is provided.

Such a solid-state LIDAR system comprises a projector for illuminating the scene with a discrete spot pattern wherein each spot is formed by a temporal sequence of pulses of laser light, a light receiving device comprising a range-gating multi-pixel detector configured for detecting spots of reflected laser light representing the discrete spot pattern as reflected by the one or more objects of the scene, a controller for controlling the projector and the light receiving device so as to detect and accumulate the reflected laser light in synchronization with the illumination of the scene, and processing means configured to calculate distances to one or more objects of the scene based on the accumulated reflected laser light.

The solid-state LIDAR device is characterized in that its projector comprises a two-dimensional laser array, a mixing chamber, a reshaping optical system and a projector lens system.

The two-dimensional laser array comprises a plurality of discrete solid-state laser light sources, each laser light source has an emission surface located in an emission plane X-Y and the laser light sources are operable for simultaneously emitting a diverging and pulsed first laser beam propagating in a direction parallel with a main optical axis Z perpendicular to the emission plane X-Y, and wherein each of the pulsed first laser beams comprises a temporal sequence of first pulses having a temporal pulse width.

The mixing chamber is extending along the main optical axis Z and configured for receiving and allowing each of the pulsed first laser beams to diverge until, for each first laser beam, at least a portion of its light rays is overlapping with light rays of adjacent first laser beams.

The reshaping optical system is configured for receiving the overlapping light rays of the pulsed first laser beams exiting the mixing chamber, and for refocussing the overlapping light rays and generating a plurality of discrete pulsed second laser beams wherein each second laser beam comprises light rays originating from multiple first laser beams, and wherein each of the pulsed second laser beams comprises a temporal sequence of second pulses having the temporal pulse width.

The projector lens system is configured for receiving the pulsed second laser beams and projecting the pulsed second laser beams towards the scene, and wherein the projected pulsed second laser beams are forming the discrete spot pattern.

With the solid-state LIDAR system according to the invention multiple existing shortcomings with prior art solid-state LIDAR systems are concurrently solved and performances improved, as will be discussed below in more detail.

Advantageously, by providing a mixing chamber and a reshaping optical system, the coherent light of the various first laser beams are mixed and the resulting second laser beams comprise substantially in-coherent laser light. As a result, the dominant speckle problem leading to spatial inaccuracy, or a substantial spatial fault discussed above is strongly reduced.

Advantageously, by bundling the light intensity of multiple first laser beams to form the second laser beams, the intensity and the brightness of the second laser beams can be increased by forming the second laser beams such that the number of second laser beams is lower than the number of initial first laser beams. This increases the detection liability and the range of the system. The intensity and brightness of a laser beam is respectively defined as the optical power, e.g. expressed in watts, per surface area of the spot, and by the optical power per solid angle.

Advantageously, by mixing the laser light of the first laser beams, the quality constraints with respect to the solid-state laser light sources, e.g. an array of VCSEL laser sources, can be reduced. Indeed, as multiple laser sources are mixed, the effect of a faulty first laser beam on the overall light intensity and light distribution of the second laser beams is small. It improves the production yield, hence the cost of the VCSEL array and it also improves the robustness of the LIDAR system.

Advantageously, the reshaping optical system can be adjusted for tuning the spot size of the second laser beams. For example, large diameter spots sizes can be used in a forward direction to illuminate the road while smaller diameter spots can be used to illuminate the surroundings.

In embodiments, the laser light produced by the discrete solid-state laser light sources laser has a wavelength between 800 nm and 1600 nm.

In embodiments, the length H of the mixing chamber is determined such that following propagation of the first laser beams through the mixing chamber, 20% or more, preferably 40% or more and more preferably 60% or more, of the light rays of each first laser beam is overlapping with light rays from adjacent first laser beams.

In some embodiments, following propagation through the mixing chamber, 100% of the light rays of each first laser beam is overlapping with light rays of adjacent first laser beams.

In embodiments, each laser light source is configured for emitting the first laser beams with a diverging angle equal or lower than 15°.

In embodiments, the two-dimensional laser array is composed of a plurality of sub-arrays, wherein each sub-array is forming a tile comprising a number of solid-state laser light sources associated to the tile. The length of the mixing chamber measured along the main optical axis is then further defined such that, following propagation of the first laser beams through the mixing chamber, for each tile at least a portion of its light rays is overlapping with light rays of adjacent tiles. In embodiments, 20% or more, preferably 40% or more, more preferably 60% or more of the light rays of each tile is overlapping with light rays of adjacent tiles. In some other embodiments, 100% of the laser light of each tile is overlapping with light rays adjacent tiles.

Advantageously, cheaper, commercially available VCSEL tiles can be used as the primary laser light sources for producing the first laser beams.

Advantageously, when using VCSEL tiles as primary laser sources, the tiles can be connected in series, requiring a lower driving current and hence less heat dissipation. This also reduce the cost of the system and improves robustness and the thermal management of the system.

In embodiments, at least a portion of an inner wall of the mixing chamber comprises a mirror. Advantageously, light emitted by peripheral light sources of the two-dimensional laser array might hit the mirror and be reflected back in the mixing chamber. The mirror contributes to obtaining a homogenous light distribution in a plane perpendicular to the main optical axis.

In embodiments, the reshaping optical system comprises a micro-lens array ML[i] comprising a plurality of micro-lenses wherein each micro-lens is configured for generating one of the second laser beams.

In further embodiments, each micro-lens of the micro-lens array comprises a focal point located on a curved plane and wherein said curved plane corresponds to a curved focal plane of the projector lens system. Advantageously, the projector lens system does not need additional lenses for correcting for optical aberrations of the projector lens system, more precisely correcting for the Petzval field curvature.

In embodiments, each micro-lens of the micro-lens array comprises a rear focal point located on a curved plane and wherein said curved plane corresponds to a curved front focal plane of the projector lens system.

In some embodiments, each of the micro-lenses of the micro-lens array comprises an optical axis parallel with the main optical axis of the projector.

In preferred embodiments, at least a portion of the micro-lenses of the micro-lens array comprise an optical axis that is not parallel with the main optical axis of the projector. Advantageously, the size of the projector lens system can be reduced. For example the diameter of the projector lens system can be reduced.

In some embodiments, the solid-state LIDAR system is configured for detecting reflected laser light during at least two successive detection time windows, and the processing means are configured to calculate the distance to the object based on laser light detected during the two successive detection time windows.

In embodiments, the controller is configured to control the two-dimensional laser array such that each of the plurality of discrete solid-state laser light sources is emitting the first pulses at a pulse frequency such that $F_P \leq 1/(TOF_{max} + PW)$, with $F_P$ being the pulse frequency, with PW being the temporal pulse width, and with $TOF_{max}$ being a maximum time of flight for a predefined maximum distance $D_{max}$ to an object to be determined. This maximum distance can be construed as the maximum operational range of the LIDAR system. This maximum operational range can for example be a value between 50 and 500 meter.

In some embodiments, an inter-tile spacing ($\Delta_T$) between the tiles is equal or larger than 0.3 millimeter, and wherein for each of the tiles, an inter-distance between the solid-state laser light sources ($\Delta_{VCSEL}$) of the tile is equal or lower than 0.1 millimeter.

In embodiments, the processing means comprise a processor or a microprocessor.

In embodiments, the projector lens system comprises a projector lens, such as an objective lens.

In embodiments, one or more optical laser light reflecting elements are located inside the mixing chamber for extending the travelling path of the first laser beams. Advantageously, the length of the mixing chamber can be reduced while maintaining a sufficient mixing of the first laser beams.

## Short description of the drawings

These and further aspects of the present disclosure will be explained in greater detail by way of example and with reference to the accompanying drawings in which:

Fig.1 schematically illustrates a LIDAR system according to the invention,

Fig.2 schematically illustrates a discrete spot pattern projected on a scene,

Fig.3 schematically illustrates a temporal sequence of pulses forming a pulsed laser beam,

Fig.4 schematically illustrates a repetition of a number of frames,

Fig.5 schematically illustrates a cross-sectional view of a projector according to embodiments of the invention,

Fig.6 schematically illustrates a VCSEL tile geometry,

Fig.7 schematically illustrates a concept according to the invention for mixing first laser beams to form second laser beams,

Fig.8 schematically illustrates a cross-sectional view of a projector according to embodiments of the invention wherein the projector comprises a VCSEL tile laser array,

Fig.9 schematically illustrates a cross-sectional view of part of a projector according to an embodiment of the invention comprising a micro-lens array wherein the focal points are located on a curved plane,

Fig.10 schematically illustrates a cross-sectional view of part of a projector according to a further embodiment of the invention comprising a micro-lens array wherein the focal points are located on a curved plane,

Fig.11 schematically illustrates a cross-sectional view of a projector comprising a micro-lens array wherein each micro-lens has an optical axis parallel with a main optical axis of the projector,

Fig.12 schematically illustrates a front end emitting VCSEL laser array,

Fig.13 schematically illustrates a back end emitting VCSEL laser array,

The drawings of the figures are neither drawn to scale nor proportioned. Generally, identical components are denoted by the same reference numerals in the figures.

## Detailed description of embodiments

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

*Solid state LIDAR system, general*

According to an aspect of the invention, a solid-state LIDAR system is provided for determining distances to a scene. A LIDAR system has to be construed as any system that is measuring distances to one or more object of a scene by illuminating the scene with laser light and measuring the reflected laser light with a detector. The present invention addresses however a specific category of LIDAR systems, namely so-called "solid-state" LIDAR systems making use of semiconductor technology. The solid-state LIDAR systems have to be construed as systems using both solid state technology for producing the laser light and as well as the detector for detecting the reflected laser light. For example, in embodiments, the laser light is produced by VCSEL-type semiconductor lasers and the detector is a CMOS-based semi-conductor pixel detector.

A scene is to be construed as an area, for example an area as observed by a LIDAR device mounted to a windshield or a bumper of a car. Depending on the field of view of the LIDAR device, the scene can cover a large area or a smaller area. A field of view for automotive applications is for example 30° x 10°, 120°x20° or any other field of view The scene can comprise for example various objects being located at different distances from the LIDAR device or few objects or only one object. The LIDAR system aims at performing a distance mapping of the scene thereby identifying different distances to objects or distances to portions of the scene.

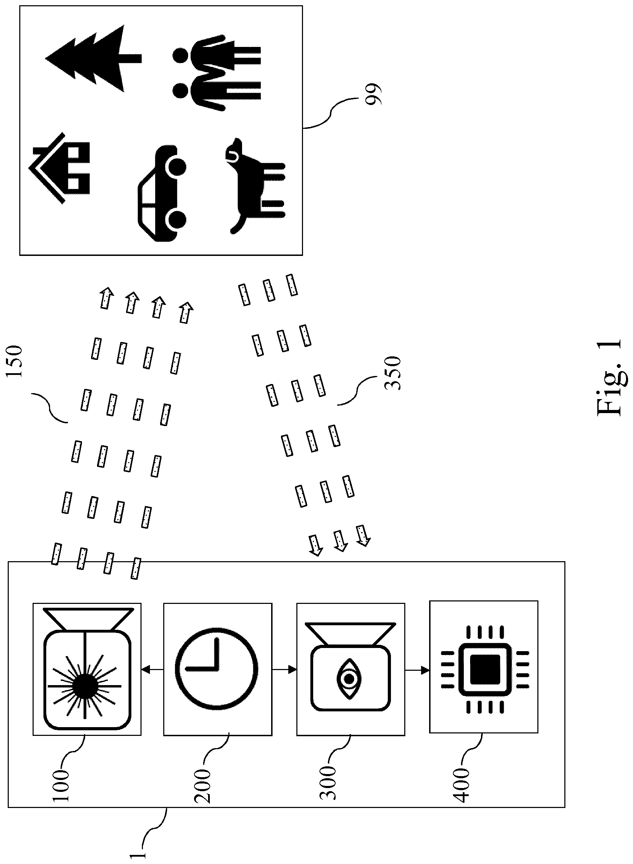

An example of solid-state LIDAR system 1 according to the invention is schematically illustrated on Fig.1. Such a system 1 for determining distances to a scene 99 comprises a projector 100 for illuminating the scene 99 with a discrete spot pattern 150 wherein each spot is comprising a temporal sequence of pulses of laser light, and a light receiving device 300 comprising a range-gating multi-pixel detector configured for detecting spots of reflected laser light representing the discrete spot pattern as reflected by the objects of the scene. The reflected laser light is forming a reflected discrete spot pattern 350 and is schematically indicated on Fig.1. The reflected discrete spot pattern 350 corresponds to the discrete spot pattern 150 as reflected by the object of the scene and is observed on the range-gating multi-pixel detector as a plurality of detected spots.

Remark that on Fig.1 the projected spot pattern and the reflected spot pattern are schematically represented as interrupted lines for illustrative purpose only and hence these interrupted lines do not present a real timing of the pulses. Indeed, in practice, as will be discussed below, when a pulse of the sequence of pulses is emitted, the next pulse of the sequence is generally only emitted after the previous pulse has, after a potential reflection of an object, been detected in the detector.

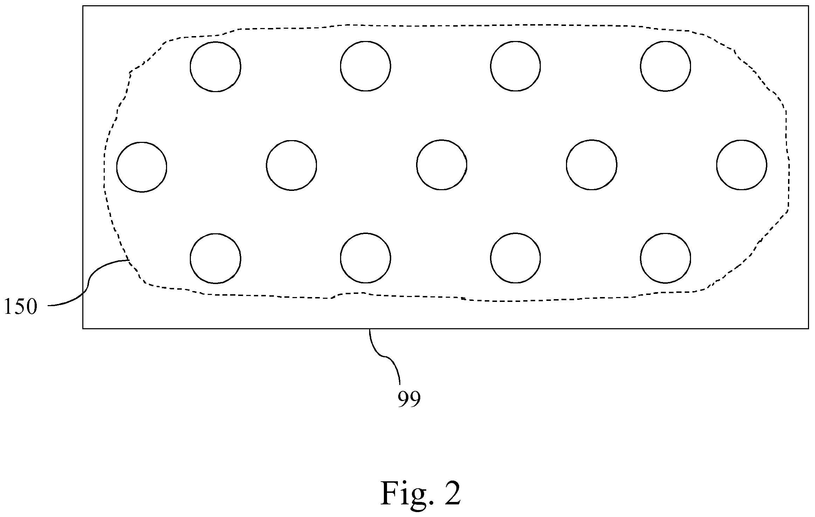

An example of a discrete spot pattern 150 that is illuminating a scene 99 is further illustrated on Fig.2. The circles on Fig.2 schematically illustrate the spots of the discrete spot pattern 150. Discrete spots have to be construed as spots that are separated from each other, as shown on Fig.2. The spot pattern can be a regular pattern or an irregular pattern. The number of spots of the spot pattern can vary from embodiment to embodiment and is for example in a range between 10000 and 100000 spots. In some embodiments, the number of spots can also be much lower and be as low as four spots. As mentioned above, each spot comprises a sequence of pulses of laser light, typically provided by a pulsed laser beam.

The wavelength of the laser light produced by the laser beams forming the discrete spot of the LIDAR system according to the invention is between 800 nm and 1600 nm.

The range-gating multi-pixel detector has to be construed as a detector comprising multiple pixels and wherein the detector is configured for detecting and accumulating laser light in at least two consecutive detection time windows.

An example of a range-gating multi-pixel detector is described in WO2017/068199. Such a detector is based on a range-gating technique which is distinct from the direct TOF technique. With the range-gating technique, reflected laser light is detected as function of time during at least two subsequent time windows and wherein the time window is essential equal to the pulse width of the emitted laser pulses forming the discrete spot pattern. The first time window generally substantially overlaps with the time period corresponding to the emission of the pulse. Based on the intensities identified in the at least two time windows the distance to the scene can be determined.

The solid-state LIDAR system 1 further comprises, as schematically shown on Fig.1, a controller 200 for controlling the light receiving device 300 and the projector 100 so as to detect and accumulate the reflected laser light in synchronization with the illumination of the scene. The LIDAR system 1 also comprises processing means 400 configured to calculate distances to the objects of the scene based on the accumulated reflected laser light. In embodiments, the controller 200 comprises synchronization means which may include a conventional clock circuit or oscillator. The processing means 400 generally comprise a processor or a computer comprising algorithms, known in the art, for calculating the distance to an object based on the reflected laser light detected.

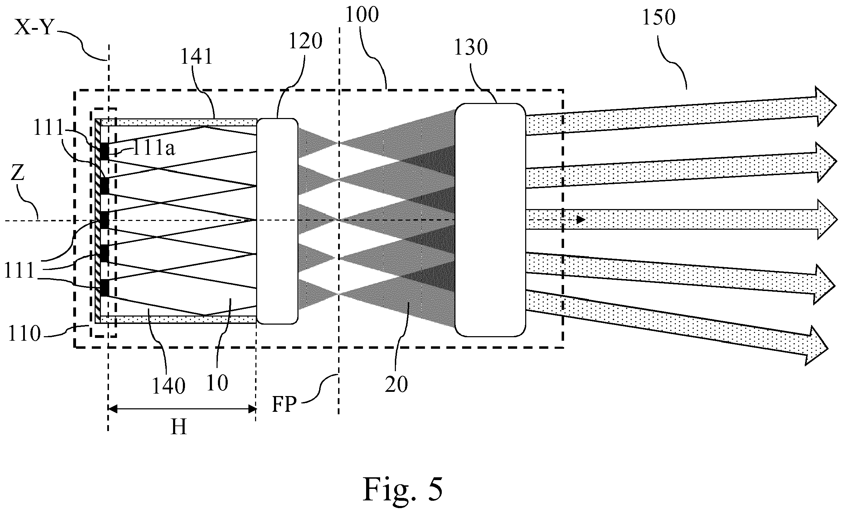

The projector 100 of the solid-state LIDAR system 1 according to the invention is shown in more detail on Fig.5. The projector 100 comprises a two-dimensional laser array 110, a mixing chamber 140, a reshaping optical system 120 and a projector lens system 130.

The two-dimensional array 110 comprises a plurality of discrete solid-state laser light sources 111. In embodiments, the solid-state laser light source 111 is a semiconductor laser, such as for example a VCSEL semiconductor laser. As illustrated on Fig.5, these solid-state laser sources typically have an emission surface 111a located in an emission plane X-Y of the array. The laser array 110 is operable such that each laser light source is simultaneously emitting a pulsed first laser beam 10 diverging in a direction parallel with a main optical axis Z perpendicular to the emission plane X-Y. In this way, a plurality of parallel first laser beams are obtained propagating in a direction parallel with the main optical axis. Each of the pulsed first laser beams comprises a temporal sequence of first pulses having a temporal pulse width PW.

The mixing chamber 140 is extending along the main optical axis Z and is configured for receiving and allowing propagation of each of the pulsed first laser beams 10 in a direction parallel with the main optical axis Z until at least a portion of light rays of each first laser beam is overlapping with light rays of adjacent first laser beams. Indeed, as the first laser beams emitted by the solid-state laser sources are divergent beams, e.g. having for example a divergence angle between 5° and 15°, the first beams will, after having propagated over a given distance in the mixing chamber, start overlap. Overlapping is to be construed as spatially overlapping.

In embodiments, the divergence angle of the first laser beams is equal or smaller than 25°.

By using a mixing chamber as discussed above and allowing the light rays of a laser beam overlap with light rays from adjacent laser beams, the coherent laser light of each individual laser source is being mixed with coherent laser light from a plurality of other laser sources.

The mixing chamber has a length H measured along the main optical axis Z. The longer the length of the mixing chamber the more the light rays of each laser beam will become inter-mixed with the light rays from other laser beams.

In embodiments, the length H of the mixing chamber is determined such that following propagation of the first laser beams through the mixing chamber, 20% or more, preferably 40% or more, more preferably 60% or more of the laser light of each first laser beam is overlapping with adjacent first laser beams. In other embodiments, following propagation through the mixing chamber, 100% of the laser light of each first laser beam is overlapping with adjacent first laser beams. The person skilled in the art will define the length H of the mixing chamber in accordance with an amount of mixing required to minimize the impact of speckle on the spatial accuracy as discussed above, and thereby taking into account that the LIDAR system should be kept compact. The skilled person can for example follow an iterative process to determine the amount of overlapping laser light required by modifying the length H until the speckle noise is not anymore the dominant noise factor. Other examples on how to determine an optimum length H of the mixing chamber will be further discussed below in more detail.

The reshaping optical system 120 is located between the mixing chamber 140 and the projector lens system 130. The reshaping optical system is configured for receiving the overlapping light rays of the pulsed first laser beams 10 exiting the mixing chamber 140, and for refocussing the overlapping light rays to form a plurality of discrete pulsed second laser beams 20. These pulsed second laser beams 20 are forming the discrete spot pattern 150. Discrete laser beams have to be construed as beams that are spatially separated.

Each of the pulsed second laser beams comprises a temporal sequence of second pulses having the temporal pulse width PW. Indeed, the second laser beams remain to have the same temporal pulse width PW as the first laser beams as nor the mixing chamber nor the reshaping optical system is altering the temporal pulse width of the laser beams. Also the frequency of the second pulsed laser beams is the same as the frequency of the first pulsed laser beams.

Indeed, the mixing chamber only allows to have the first laser beams diverge along a given distance corresponding to the length of the mixing chamber.

In embodiments, the reshaping optical system 120 can however alter the intensity of the second pulses when compared to the intensity of the first pulses if the number of second laser beams formed by the reshaping optical system is lower than the number of first laser beams.

In some other embodiments, the reshaping optical system produces second laser beams wherein the pulses have a lower intensity than the pulses of the first laser beams.

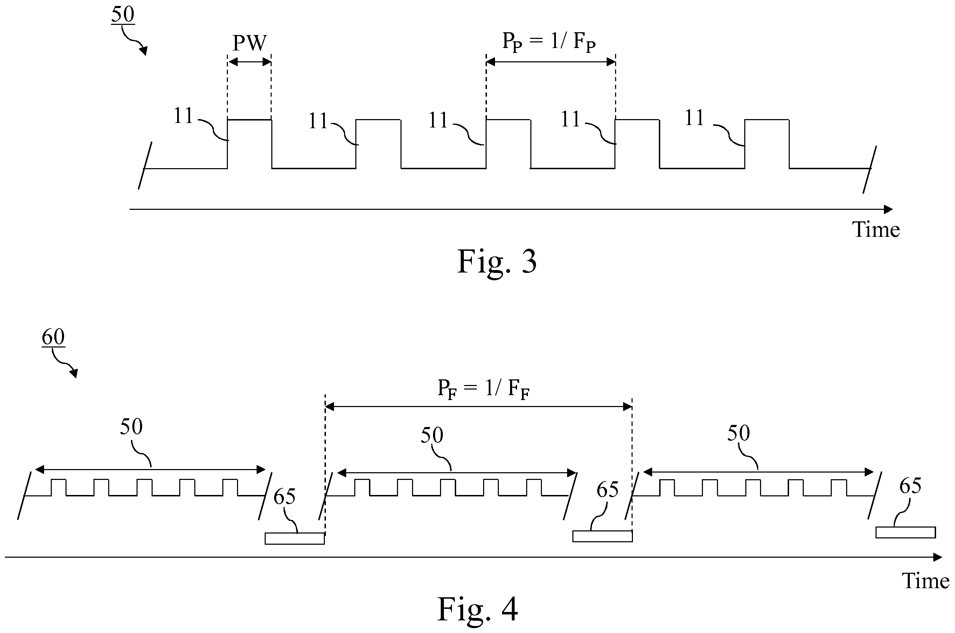

In Fig.3, an example of a temporal sequence of pulses 11 forming a pulsed second laser beam, is schematically shown. Such a temporal sequence of pulses is also named a pulse train 50. In this illustrative example, only 5 pulses are shown, in practice however the number of pulses in a pulse train is generally much larger. For example, in some embodiments, the number of pulses in a pulse train is ranging between 50 and 500 pulses. These pulses are typically block pulses. The temporal pulse with PW of the pulse 11 and the pulse period $P_P$, being the inverse of the pulse frequency $F_P$, are indicated on Fig.3. The number of pulses in the sequence can depend on various factors such as for example the amplitude per pulse which might be limited for reasons of eye safety, and/or the number of pulses can be defined for obtaining a sufficient signal to noise ratio for detecting reflected laser light.

In embodiments, the controller 200 is configured for controlling the two-dimensional laser array 110 such that each of the plurality of discrete solid-state laser light sources is emitting the first pulses at a pulse frequency $F_P$ such that $F_P \leq 1/(TOF_{max} + PW)$, with PW being the temporal pulse width defined above and $TOF_{max}$ being the maximum time of flight of a predefined maximum distance $D_{max}$ that needs to be determined. This maximum distance $D_{max}$ can be construed as the maximum operational range of the solid-state LIDAR system, it defines up to what maximum distance an object in the scene can still be detected and the distance determined. This maximum distance $D_{max}$ can for example be a value between 50 and 500 meter. Defining $F_P$ as being equal or lower than the above defined maximum pulse frequency, guarantees that when a given pulse is emitted the next pulse of the temporal sequence is only emitted when the previous pulse as reflected by an object located at the maximum distance $D_{max}$ is detected in the range-gating multi-pixel detector. This avoids a problem known as aliasing.

In embodiments, the pulse frequency $F_P$ of a pulse train 50, as illustrated on Fig.3, is typically in the kHz range, for example between 10 kHz and 500 kHz

As mentioned above, the projector 100 further comprises a projector lens system 130. The projector lens system 130 is an optical system comprising one or more optical lenses configured for receiving the pulsed second laser beams forming the discrete spot pattern and for projecting this illuminating pattern 150 formed by the second laser beams towards the scene 99.

In prior art systems such as the LIDAR system described in WO2017/068199, the projector lens system is a complex, customized and expensive lens system. Indeed, a simple projector lens cannot be used as a single lens has generally no flat focal plane, well known as the Petzval field curvature. The consequence is that when the projector lens system is projecting the spot pattern to the scene, not all of the spots of the spot pattern are in focus at infinity. Therefore corrections need to be applied to correct for this non-flat focal plane.

The projector lens system 130 of the projector according to the invention is simplified when compared to the projector system of WO2017/068199 as the reshaping optical system 120 can be designed such that its focal plane is curved and coincides with the curved focal plane of the projector lens system 130. In this way a simple projector lens can be used to project the light pattern. Indeed as the reshaping optical system 120 provides for a curved focal plane, there are no for further correction lenses required. As a result, the length of the projector lens system 130 along the main optical axis Z is reduced. Hence this reduction can compensate or partly compensate for the increased length of the projector due to the addition of a mixing chamber. In embodiments, also the size of the projector lens, in a plane perpendicular to the X-Y plane is reduced, as will be further discussed below. How the projector lens system 130 according to the invention is simplified when compared to prior art projector lens systems will be further discussed below.

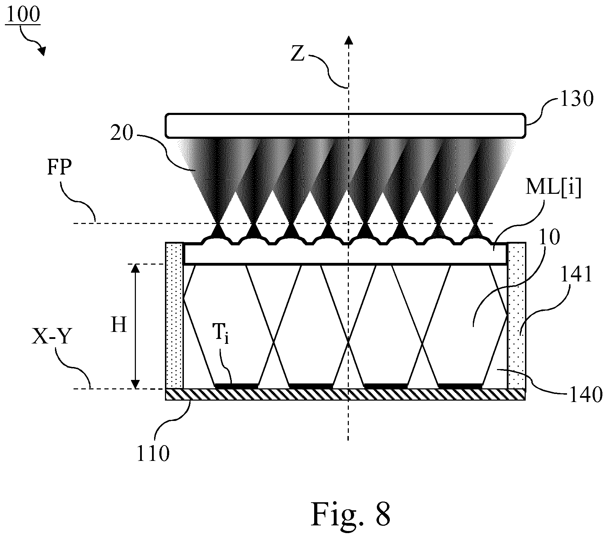

In embodiments, as further illustrated on Fig.5 and Fig.8, at least a portion of an inner wall of the mixing chamber 140 comprises a mirror 141 for reflecting laser light hitting the inner walls of the mixing chamber. Indeed, depending on the diverging angle of the light sources and the length H of the mixing chamber, light emitted by peripheral light sources of the two-dimensional array might hit the mirror and be reflected back in the mixing chamber. The mirror further helps to, following the mixing of the first laser beams, obtain a homogenous light distribution in plane perpendicular to the main optical axis, as will be further discussed in more detail.

In embodiments, the solid-state LIDAR system according to the invention comprises a housing enclosing at least the projector 100 and the light receiving device 300. In other embodiments, the solid-state LIDAR system according to the invention comprises a housing enclosing the projector 100, the light receiving device 300 and the controller 200, and preferably also comprising the processing means 400.

As discussed above, for determining a distance to an object, multiple frames are taken for determining an average object distance. Therefore, the illumination of the scene with the discrete spot pattern is repeated a number of times such that a multiple number of distances, i.e. single-frame distance measurements, are obtained allowing to take an average value of the multiple single-frame measurements. Frames can be repeated at a frame rate $F_F$, which is generally much lower than the pulse frequency $F_P$ of the pulses in the projected laser beams. In Fig.4 an example of a repetition of frames 60 is schematically illustrated and the frame rate $F_F$ is indicated. In this example a repetition of three frames is shown, in practice the number of frame repetitions to determine an average distance value is generally much larger. As schematically illustrated on Fig.4, following each pulse train 50, a processing time 65 is required to read out the exposure values and process the acquired data. The frame rate $F_F$ that can be reached is typically in the Hz range, in embodiments, the frame rate is for example between 5 Hz and 50 Hz. The frame rate is generally limited by the speed of the CMOS detector and also generally limited by eye safety regulations.

In embodiments, the light receiving device 300 comprises an objective lens for projecting the reflected pattern of laser light on the range gating multi-pixel detector. In preferred embodiments, the light receiving device 300 further comprises a narrow bandpass filter, for example for filtering out daylight.

In further embodiments according to the invention, one or more optical laser light reflecting elements are located inside the mixing chamber for extending the travelling path of the first laser beams. In this way, the length H of the mixing chamber can be reduced while maintaining a sufficient mixing of the first laser beams.

*Micro-lens array*

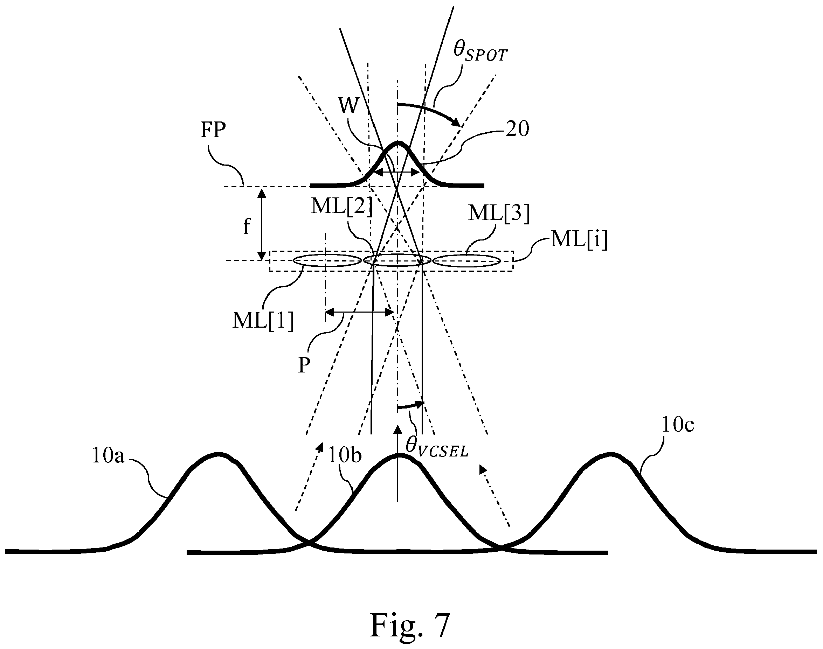

In embodiments, the reshaping optical system 120 comprises a micro-lens array ML[i] comprising a plurality of micro-lenses. For example, in Fig.7 a cross sectional view is shown illustrating three micro-lenses of a micro-lens array ML[i]. Each micro-lens has its proper optical axis. Each of these plurality micro-lenses is configured for forming an associated second laser beam. Hence, the number of micro-lenses defines the number of second laser beams formed and hence the number of spots in the discrete spot pattern.

As mentioned above, the number of spots in the discrete spot pattern is generally ranging from 10000 to 100000. In embodiments the number of discrete spots is for example about 20000 and hence in these embodiments the number of micro-lenses is 20000.

In embodiments, the single element size of a micro-lens is about 79 micrometer and the projected spot formed by the micro-lens is about 15 micrometer.

In some embodiments the number of micro-lenses is equal to the number of laser light sources, while in other embodiments the number of micro-lens is lower than the number of laser light sources such that the pulse intensity of the second beams is larger than the pulse intensity of the first beams.

In embodiments, each of the micro-lenses has a hexagonal shape. With this type of micro-lens configurations an efficiency of about 95% can be reached, i.e. only 5% of laser light is lost when transforming from first to second laser beams.

The micro-lens array may be formed on a substrate using a photolithographic process, known in the art. Such processes are capable of fabricating micro-lens arrays wherein the micro-lenses have a diameter of the order of micrometers, for example diameters between 30 micrometer and 100 micrometer and a focal point in the range between 30 micrometer and 100 micrometer.

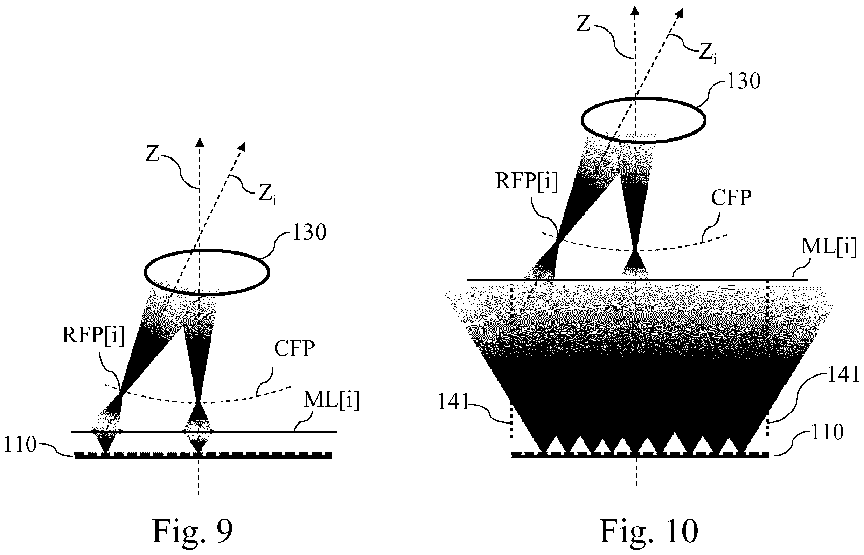

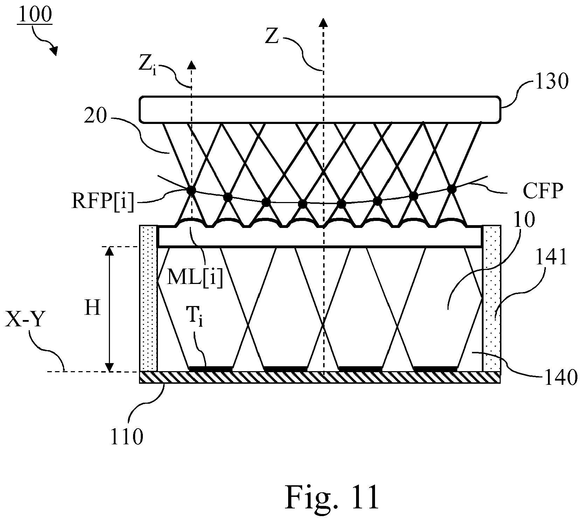

In some embodiments, as shown for example on Fig.11, the optical axes $Z_i$ of the individual micro-lenses are parallel with the main optical axis Z. In other embodiments, shown for example on Fig.9 and Fig.10, the optical axis of a micro-lens is not necessarily parallel with the main optical axis Z, as will be further discussed below.

In embodiments, the micro-lens array is also adapted to correct for the optical problem discussed above, namely the fact the focal plane of an optical lens is not flat but curved, known as the Petzval field curvature. Indeed, if the projector lens system has a curved focal plane and not a flat plane, the consequence is that the projected spots of the spot pattern are not all in focus at infinity and only part of the spots are in focus. Hence, not all spots have the maximum intensity per surface area. Generally, the central spots are in focus and the outer spots are out of focus. In prior art LIDAR systems, to remedy this problem, the projector lens system comprises besides an objective lens one or more additional correction lenses to correct for these optical aberrations. This makes the projector more expensive, larger and more complex.

In embodiments according to the invention, the micro-lens array is configured such that each micro-lens comprises, a focal point, more precisely a rear focal point RFP[i], located on a curved plane CFP, instead of a flat plane as shown for example on Fig.8. The curved plane CFP is illustrated on Fig.9 to Fig.11. This curved plane CFP corresponds to a virtual image plane of the projector. More particularly, the curved plane corresponds to a curved focal plane, more precisely a curved front focal plane, of the projector lens system. In other words, the micro-lens array has a curved rear focal plane that is coinciding with the curved front focal plane of the projector lens system. In this way, by providing a micro-lens array with a curved focal plane, the projector lens system 130 of the projector 100 can be strongly simplified when compared to the projector lens system disclosed in for example WO2017/068199 that requires various additional correction lenses to correct for the Petzval curvature of the projector lens.

In embodiments the curved focal plane CFP corresponds to a curved focal plane of the projector lens system 130.

In the embodiment shown on Fig.11, as mentioned above, the optical axes $Z_i$ of the individual micro-lenses are parallel with the main optical axis Z.

On the other hand, for the embodiments shown on Fig.9 and Fig.10, at least a portion of the micro-lenses has an optical axis $Z_i$ that is not parallel with the main optical axis Z. Advantageously, for these embodiments the size of the projector lens system 130, i.e. a size in a plane perpendicular to the main optical axis Z, can be reduced when compared to embodiments where the optical axis $Z_i$ of each of the micro-lenses is parallel with the main optical axis. For example if the the projector lens system 130 is formed by a standard projector lens then the diameter of the projector lens can be reduced.

*Semiconductor laser light sources*

In embodiments, each of the solid-state light sources of the two-dimensional array is a vertical-cavity surface-emitting (VCSEL) laser. The VCSEL is a type of semiconductor laser diode with laser beam emission perpendicular from a top surface, the top surface forming the emission surface 111a. The emission surface of the VCSEL is generally circular and has a diameter in the micrometer range, for example a diameter in the range between 10 micrometer to 25 micrometer. When an array of VCSELs is formed, individual VCSELs are separated by an inter-VCSEL spacing, which is typically a distance between 10 micrometer and 60 micrometer. By combining a plurality, for example hundreds to thousands of VCSELs, the two-dimensional array is formed.

The laser light emitted from the emission surface of the VCSEL laser has a divergence angle $\theta_{VCSEL}$ which is typically in a range between 3° and 15°. Indeed, the laser light emitted by the laser light sources should be as small as possible to maintain discrete spots illuminating the scene.

For selecting an adequate divergence angle $\theta_{VCSEL}$ a compromise is to be made. On the one hand the divergence angle should be as low as possible to obtain a small beam spot and on the other hand the divergence angle should be not too small in order the length H of the mixing chamber not to become too long. In embodiments, the VSCEL is selected such that the divergence angle $\theta_{VCSEL}$ is in a range between 3° and 15°. In embodiments, the divergence angle $\theta_{VCSEL}$ is 10°.

In particular embodiments according to the invention, the two-dimensional laser array 110 is composed of a plurality of sub-arrays, wherein each sub-array is forming a tile $T_i$ comprising a number $ST_i$ of solid-state laser light sources associated to the tile $T_i$ such that a total number ST of solid-state laser light sources of the two-dimensional laser array is expressed as:

$$ST = \sum_{i=1}^{NT} STi$$

with NT being the total number of tiles of the laser array.

In embodiments, the tiles $T_i$ are VCSEL tiles. Each VCSEL tile can for example comprise between 500 and 2000 VCSEL light sources. The two-dimensional array 110 is then formed by ordering a plurality of VCSEL tiles in rows and columns. For example a rectangular two-dimensional array 110 can be formed with N rows and M columns of VCSEL tiles, with N and M $\geq$ 2. The size of a tile is generally in the millimeter range. A tile can have a dimension of for example 2 mm x 2 mm, or 1 mm x 1 mm. These type of VCSEL tiles are commercially available. Remark that the tiles of the two-dimensional array 110 do not necessarily need to have the same shape or have the same amount of VCSEL sources.

The tiles of a VCSEL array formed by tiles are separated from each other by an inter-tile spacing. The inter-tile spacing is in the millimeter range. In embodiments, the inter-tile spacing is equal or larger than 0.3 millimeter, preferably equal or larger than 0.5 millimeter.

For each of the tiles, an inter-VCSEL spacing is equal or lower than 0.1 millimeter, preferably equal or lower than 0.05 millimeter.

In embodiments, the inter-VCSEL spacing is in a range between 10 micrometer and 30 micrometer.

In embodiments wherein the tiles have a rectangular shape and wherein the tiles are arranged for forming a regular VCSEL pattern, the inter-tile distances are the same for the entire two dimensional laser array 110.

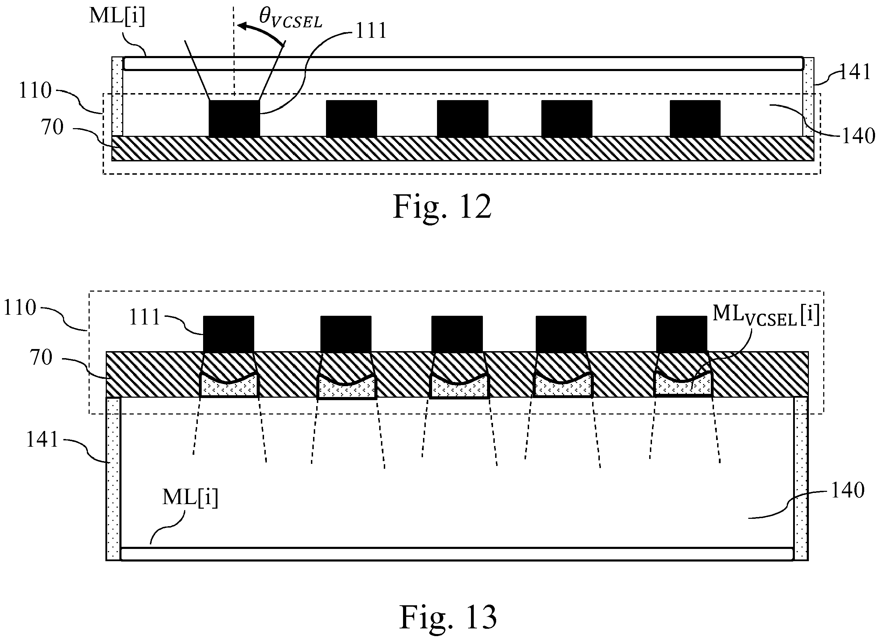

In embodiments, the two-dimensional laser array 110 is a front-end VCSEL array as schematically illustrated on Fig.12. A front-end VCSEL array is an array wherein the laser light emitted by the VCSEL laser light source 111 is not traversing the substrate 70.

In other embodiments, the two-dimensional laser array 110 is a back-end VCSEL array as schematically illustrated on Fig.13. A back-end VCSEL array is an array wherein the laser light emitted by the VCSEL laser light source 111 is traversing the substrate 70. In preferred embodiments, the back-end VCSEL array comprises a VCSEL micro-lens array $ML_{VCSEL}[i]$ configured for reducing the divergence angle $\theta_{VCSEL}$ of each of the VCSEL's. Such a micro-lens array is for example etched in the substrate 70 of the VCSEL array 110. In order to be able to use a back-end VCSEL array, the substrate 70 needs to be transparent for the laser light. Currently available back-end VCSEL arrays are for example transparent for laser light at 940 nanometer.

*Mixing chamber*

As discussed above, the mixing chamber 140 has a length H measured along the main optical axis. The mixing chamber needs to be sufficiently long such that laser light of the first laser beams become sufficiently mixed. Generally, a mixing plane $P_M$ parallel with the emission plane X-Y is defined as a plane wherein the light rays of the first laser beams are overlapping to the extent that the light becomes distributed homogenously. A homogenous light distribution is to be construed as a distribution where the light intensity across the mixing plane $P_M$ is essentially flat. The length H of the mixing chamber is generally defined such that the mixing plane $P_M$ is located at the end of the mixing chamber or at the entrance of the reshaping optical system 120. If the reshaping optical system comprises a micro-lens array the mixing plane can be located just in front of the micro-lens array.

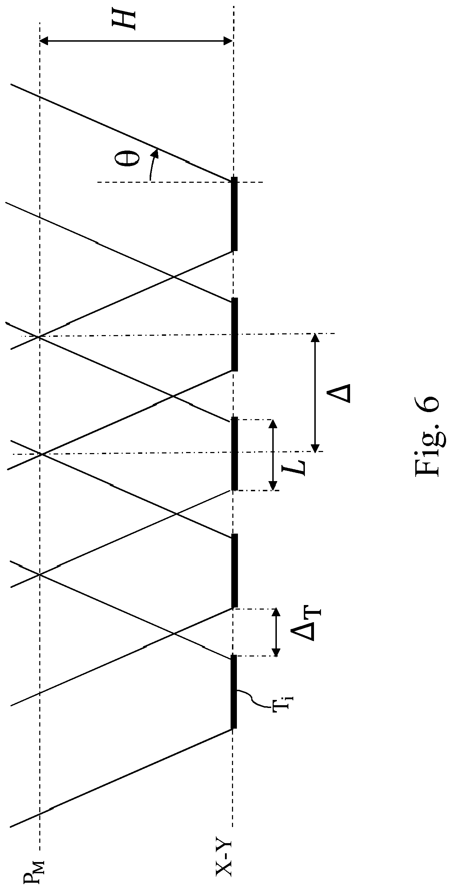

On the other hand, the length H of the mixing chamber 140 should also be as short as possible in order to maintain a compact LIDAR device. In Fig.6, the mixing plane $P_M$ is shown to be located at the end of the mixing chamber.

When tiles are used as laser sources, the length H of the mixing chamber measured along the main optical axis Z is defined such that, following propagation of the first laser beams through the mixing chamber, then for each tile at least a portion of its light rays is overlapping with light rays of adjacent tiles. Overlapping has to be construed as spatially overlapping. In embodiments at least 20% or more, preferably 40% or more, more preferably 60% or more, of the laser light of each tile is overlapping with light rays of adjacent tiles. In other embodiments, 100% of the laser light of each tile is overlapping with light rays adjacent tiles. An approach for defining an optimum distance for the length of the mixing chamber when using tiles is given below.

As schematically illustrated on Fig.6, a minimum length H for the mixing chamber 140 can be determined with the following formula:

$$ H \geq \frac{\Delta - \left(\frac{L}{2}\right)}{\tan(\theta)} $$

with $\Delta$ being a distance between centres of two adjacent tiles, $\theta$ being the beam diverging angle of the VCSEL laser source, and L being a length of a side of the rectangular tile. For example if $\Delta$ = 2.5 mm, L = 2 mm and $\theta$=10°, then H $\geq$ 8.5 mm. On Fig. 3, an embodiment is shown where the light sources are tiles of VCSEL arrays.

In other embodiments, where no tiles are used but where the light sources are for example formed by a plurality of individual VCSELs forming a regular matrix, the above mentioned formula can be applied to determine the minimum distance H required for the mixing chamber 140. For these embodiments where no tiles are used, the distance $\Delta$ is this case the distance between centres of two adjacent VCSEL laser sources, e.g. 50 micrometer, and L is then the diameter of the circular emission surface of an individual VCSEL, e.g. 15 micrometer. If no tiles are used, the minimum distance required for H to have sufficient spatial overlap between the first laser beams is much shorter.

The formation of a second laser beam 20 comprising light rays from multiple first laser beams is schematically illustrated on Fig.7. In this illustrative example, the micro-lens ML[2] receives portions of light rays from the first laser beams 10a, 10b and 10c. The micro-lens ML[2] has a focal distance f and focusses the light rays transmitted through the micro lens ML[2] in the focal plane FP so as to form a second laser beam 20 composed of light rays portions of the first laser beams 10a, 10b and 10c. In the focal plane FP of the micro-lens ML[2] an image of a spot is observed corresponding to the composed second laser beam 20 having a beam spot width W and a divergence $\theta_{SPOT}$. As illustrated on Fig.7, the width W of the second laser beam 20 in the focal plane 20 can be found with the following formula: $\tan(\theta_{VCSEL})$ = W/(2 x f), with $\theta_{VCSEL}$ being the divergence angle of the first laser beams 10a,10b,10c. The divergence angle $\theta_{SPOT}$ of the second laser beam 20 can be found with the following formula: $\tan(\theta_{SPOT})$ = ((W+P)/(2 x f)), with P being the distance between the centre of two adjacent micro-lenses. In Fig.7, only a schematic drawing of the principle of forming a second laser beam based on a plurality of first laser beams is shown, in practice, the number of overlapping first laser beams for forming the second laser beam is generally larger.

In Fig.8 a cross-sectional view of an embodiment of a projector 100 according to the invention is shown wherein the projector comprises a two-dimensional laser array 110 formed by a plurality of VCSEL tiles T[i]. Each VCSEL tile comprises a plurality of VCSEL lasers producing the first laser beams 10. In this example, multiple first laser beams 10 originating from different tiles T[i] are being mixed while propagating through the mixing chamber 140. The micro-lens array ML[i] finally forms the second laser beams by intercepting the overlapping light rays and refocussing them to the focal plane FP, which is a common focal plane for each of the micro-lenses of the micro-lens array.

*Range gating*

As discussed above, the multi-pixel detector for detecting the reflected laser light is applying a range-gating detection technique for determining distances to objects of the scene, this is a technique distinct from the direct time of flight technique. A range gating technique has to be construed as a detection technique wherein the reflected laser light is detected and accumulated as function of time. The detection and accumulation is generally performed in time windows and the range gating technique uses at least two consecutive time windows. As discussed above, processing means calculate the distances to one or more objects of the scene based on the accumulated reflected laser light obtained with the range-gating multi-pixel detector.

An example of a range gating technique is known from WO2017/068199. A multi-pixel detector for a range gating technique comprises a plurality of pixels configured to generate, for each spot of reflected laser light detected, exposure values by accumulating, for all the pulses of the temporal sequence of pulses of the laser beam, a first amount of electrical charge representative of a first amount of light reflected by the scene during a first predetermined time window and a second electrical charge representative of a second amount of light reflected by the scene during a second predetermined time window. The second predetermined time window is subsequently occurring after the first predetermined time window. The distance to an object of the scene is calculated based on the first and second amount of electrical charges. In embodiments, the first predetermined time window and the second predetermined time window are of substantially equal duration and equal to the pulse width Pw of the pulses forming the illuminating pattern.

The invention is however not limited to a specific range gating technique, and hence is not limited to the specific range gating technique disclosed in WO2017/068199, indeed other range gating techniques using the principle of detecting and accumulating reflected laser light as function of time can be applied as well.

*Summary*

In summary, by providing a novel projector for illuminating the scene wherein second laser beams are formed by mixing first laser beams, the second laser beams are essentially emitting incoherent light. As a result, the projector projecting a spot pattern of laser light formed by discrete pulsed laser beams can be used in combination with a range-gating detection technique. Indeed, due to the mixing of the laser beams by the projector before generating the discrete spot pattern, the speckle noise discussed above, is eliminated and the spatial accuracy obtained with the LIDAR system according to the invention falls within the theoretical expectations. In other words, when taking multiple frames and determining an average object distance value, then with-

in the standard deviation $\sigma_{avg}$ being equal to $\sigma/\sqrt{N_F}$ , , with $N_F$ being the number of frames and $\sigma$ being the standard deviation of a single frame measurement, the average object distance value obtained is equal to the real distance within the standard deviation $\sigma_{avg}$. Hence by taking an adequate number of frames, with a 99.99% probability, the average distance determined is equal to the real distance within an interval around the average value of for example +/- 0.1% or for example +/- 0.5%, depending on the number of frames taken.

The LIDAR system according to the invention is suitable for integration into a vehicle. The LIDAR system being integrated in a vehicle is arranged to operatively cover at least a part of an area surrounding the vehicle. The at least part of an area is corresponding to the scene that requires the distance determination. The area that is covered depends on the field of view (FOV) of the LIDAR device and in embodiments the FOV is for example 30° x 10° or 120°x30° or 63° x 21° or any other FOV suitable for a LIDAR system. The LIDAR system according to the invention is not limited to LIDARS for automotive applications but the system can also be applied to other domains where LIDARS are for example mounted on airplanes or satellites.

**Reference numbers**

| 10, 10a,10b,10c | first laser beam |
|---|---|
| 11 | pulse of a pulse train |
| 20 | second laser beam |
| 50 | pulse train |
| 60 | repetition of frames |
| 65 | processing time |
| 70 | substrate |
| 99 | scene |
| 100 | projector |
| 110 | two-dimensional laser array |
| 111 | laser light source |
| 111a | emission surface |
| 120 | reshaping optical system |
| 130 | projector lens system |
| 140 | mixing chamber |
| 141 | mirror |
| 150 | discrete spot pattern |
| 200 | controller |
| 300 | light receiving device |
| 350 | reflected light pattern |
| 400 | processing means |
| FP | focal plane |
| CFP | curved focal plane |
| H | length of mixing chamber |
| ML[i] | micro-lens array |
| RFP[i] | front focal plane of micro lens |
| $T_i$ | tile |
| Z | main optical axis |
| X-Y | emission plane |
| $\Delta_T$ | inter-tile spacing |
| $\Delta_{VCSEL}$ | inter-vcsel spacing |

**Claims**

1. A solid-state LIDAR system (1) for determining distances to one or more objects of a scene (99) comprising

 • a projector (100) for illuminating the scene (99) with a discrete spot pattern (150) wherein each spot of the discrete spot pattern is formed by a temporal sequence of pulses of laser light,
• a light receiving device (300) comprising a range-gating multi-pixel detector configured for detecting spots of reflected laser light representing said discrete spot pattern as reflected by the one or more objects of the scene,
• a controller (200) for controlling said projector (100) and said light receiving device (300) so as to detect and accumulate said reflected laser light in synchronization with said illumination of the scene, and
• processing means (400) configured to calculate distances to one or more objects of said scene based on said accumulated reflected laser light,

**characterized in that** said projector (100) comprises:

• a two-dimensional laser array (110) comprising a plurality of discrete solid-state laser light sources (111), each laser light source having an emission surface (111a) located in an emission plane (X-Y),
and wherein said laser light sources are operable for simultaneously emitting a diverging and pulsed first laser beam (10) propagating in a direction parallel with a main optical axis (Z) perpendicular to said emission plane (X-Y), and wherein each of said pulsed first laser beams comprises a temporal sequence of first pulses having a temporal pulse width (PW),
• a mixing chamber (140) extending along said main optical axis (Z) and configured for receiving and allowing each of said pulsed first laser beams (10) to diverge until, for each first laser beam, at least a portion of its light rays is overlapping with light rays of adjacent first laser beams,
• a reshaping optical system (120) configured for

i) receiving the overlapping light rays of said pulsed first laser beams (10) exiting said mixing chamber (140), and
ii) refocussing the overlapping light rays and generating a plurality of discrete pulsed second laser beams (20) wherein each second laser beam comprises light rays originating from multiple first laser beams, and wherein each of the pulsed second laser beams comprises a temporal sequence of second pulses having said temporal pulse width (PW),

• a projector lens system (130) configured for receiving said pulsed second laser beams (20) and projecting the pulsed second laser beams towards the scene (99), and wherein said projected pulsed second laser beams are forming said discrete spot pattern (150).

2. A solid-state LIDAR system according to claim 1 wherein at least a portion of an inner wall of said mixing chamber (140) comprises a mirror (141).

3. A solid-state LIDAR system according any of previous claims wherein said reshaping optical system comprises a micro-lens array (ML[i]) comprising a plurality of micro-lenses, and wherein each micro-lens is configured for generating one of the second laser beams (20) of said plurality of second laser beams.

4. A solid-state LIDAR system according to claim 3 wherein said micro-lens array (ML[i]) is configured such that each micro-lens comprises a focal point (RFP[i]) located on a curved plane (CFP), and wherein said curved plane (CFP) corresponds to a curved focal plane of the projector lens system (130).

5. A solid-state LIDAR system according to claim 4 wherein each of said micro-lenses comprises an optical axis ($Z_i$) that is parallel with said main optical axis (Z).

6. A solid-state LIDAR system according to claim 4 wherein at least a portion of said micro-lenses comprises an optical axis ($Z_i$) that is not parallel with said main optical axis (Z).

7. A solid-state LIDAR system according to any of previous claims wherein said two-dimensional laser array (110) is composed of a plurality of sub-arrays, wherein each sub-array is forming a tile ($T_i$) comprising a number ($ST_i$) of solid-state laser light sources associated to said tile ($T_i$), and wherein a length (H) of said mixing chamber measured along said main optical axis (Z) is defined such that, following propagation of the first laser beams through the mixing chamber, for each tile at least a portion of its light rays is overlapping with light rays of adjacent tiles.

8. A solid-state LIDAR system according to claim7 wherein said tiles have a rectangular shape and wherein said tiles are arranged for forming a regular pattern such that inter-tile distances are the same for the entire two dimensional laser array (110).

9. A solid-state LIDAR system according to claim 8 wherein said length of the mixing chamber is selected such that

$$H \geq \frac{\Delta - (\frac{L}{2})}{\tan(\theta)}$$

with H being the length of the mixing chamber, $\Delta$ being a distance between centres of two adjacent tiles, $\theta$ being a beam diverging angle of said solid state laser light sources and L being a length of a side of the rectangular tiles.

10. A solid-state LIDAR system according to any of previous claims wherein each of said solid-state light sources of said two-dimensional array is a semiconductor laser, preferably a vertical-cavity surface-emitting laser.

11. A solid-state LIDAR system according to anyone of claims 1 to 9 wherein said two-dimensional laser array (110) is a front-end VCSEL array.

12. A solid-state LIDAR system according to anyone of claims 1 to 9 wherein said two-dimensional laser array (110) is a back-end VCSEL array comprising a plurality of vertical-cavity surface-emitting lasers configured for emitting laser light through a substrate (70) of the back-end VCSEL array, and wherein the back-end VCSEL array comprises a VCSEL micro-lens array ($ML_{VCSEL}[i]$) configured for reducing the divergence angle ($\theta_{VCSEL}$) of each of the vertical-cavity surface-emitting lasers of the VCSEL array, preferably the VCSEL micro-lens array ($ML_{VCSEL}[i]$) is etched in the substrate 70 of the back-end VCSEL array 110.

13. A solid-state LIDAR system according to anyone of previous claims wherein said range-gating multi-pixel detector is configured to detect reflected laser light during at least two successive detection time windows, and wherein said processing means (400) are configured to calculate the distance to the object based on laser light detected during the two successive detection time windows.

14. A solid-state LIDAR system according to any of previous claims wherein said controller (200) is configured for controlling said two-dimensional laser array (110) such that each of the plurality of discrete solid-state laser light sources is emitting said first pulses at a pulse frequency ($F_P$) such that

$$F_P \leq 1/(TOF_{max} + PW),$$

with $F_P$ being said pulse frequency, with PW being said temporal pulse width, and with $TOF_{max}$ being a maximum time of flight for a predefined maximum distance ($D_{max}$) to be determined.

15. A vehicle comprising a solid-state LIDAR system according to any of the previous claims having a field of view covering at least a part of an area surrounding said vehicle, and wherein said at least part of an area corresponds to said scene.

Fig. 1

EP 3 789 787 A1

150

99

Fig. 2

PW

$P_P = 1/F_P$

11    11    11    11    11

Time

Fig. 3

$P_F = 1/F_F$

50    50    50

65    65    65

Time

Fig. 4

EP 3 789 787 A1

Fig. 5

Fig. 6

$\theta_{SPOT}$

20

ML[3]

ML[i]

ML[2]

W

FP

f

ML[1]

P

$\theta_{VCSEL}$

10c

10b

10a

Fig. 7

Fig. 8

EP 3 789 787 A1

Fig. 10

Fig. 9

EP 3 789 787 A1

Fig. 11

Fig. 12

Fig. 13

Europäisches
Patentamt

European
Patent Office

Office européen
des brevets

# EUROPEAN SEARCH REPORT

Application Number

EP 19 19 5236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2017/068199 A1 (XENOMATIX NV [BE]) 27 April 2017 (2017-04-27) * abstract; figures 1-11 * * page 6, line 24 - page 11, line 13 * * page 14, line 7 - page 16, line 7 * * page 22, line 19 - page 26, line 22 * ----- | 1-15 | INV. G01S7/481 G01S7/483 G01S17/10 |
| Y | US 9 273 846 B1 (ROSSI MARKUS [CH] ET AL) 1 March 2016 (2016-03-01) * the whole document * ----- | 1-15 | |
| Y | WO 2015/042331 A1 (MICROSOFT CORP [US]) 26 March 2015 (2015-03-26) * abstract; figure 7 * * paragraph [0075] - paragraph [0085] * ----- | 1-15 | |
| | | | **TECHNICAL FIELDS SEARCHED (IPC)** G01S |

The present search report has been drawn up for all claims

| Place of search | Date of completion of the search | Examiner |
|---|---|---|
| Munich | 21 February 2020 | López de Valle, J |

EPO FORM 1503 03.82 (P04C01)

## ANNEX TO THE EUROPEAN SEARCH REPORT
## ON EUROPEAN PATENT APPLICATION NO.

EP 19 19 5236

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2020

| Patent document cited in search report | | | Publication date | Patent family member(s) | | | Publication date |
|---|---|---|---|---|---|---|---|
| WO 2017068199 | A1 | | 27-04-2017 | BE | 1023788 | A1 | 26-07-2017 |
| | | | | CN | 108139483 | A | 08-06-2018 |
| | | | | EP | 3159711 | A1 | 26-04-2017 |
| | | | | EP | 3365700 | A1 | 29-08-2018 |
| | | | | JP | 2018531374 | A | 25-10-2018 |
| | | | | KR | 20180073571 | A | 02-07-2018 |
| | | | | US | 2018299554 | A1 | 18-10-2018 |
| | | | | WO | 2017068199 | A1 | 27-04-2017 |
| US 9273846 | B1 | | 01-03-2016 | NONE | | | |
| WO 2015042331 | A1 | | 26-03-2015 | TW | 201515460 | A | 16-04-2015 |
| | | | | US | 2015085075 | A1 | 26-03-2015 |
| | | | | US | 2016341829 | A1 | 24-11-2016 |
| | | | | WO | 2015042331 | A1 | 26-03-2015 |

EPO FORM P0459

For more details about this annex : see Official Journal of the European Patent Office, No. 12/82

**REFERENCES CITED IN THE DESCRIPTION**

**Patent documents cited in the description**

- WO 2017068199 A